# FASCICULE DE BREVET EUROPEEN

(11) **EP 3 303 825 B1**
(45) Date de publication et mention de la délivrance du brevet: **08.05.2019**
(21) Numéro de dépôt: 16729814.0
(22) Date de dépôt: 01.06.2016
(51) Int. Cl.: F03B 13/06, E02B 9/06, F03B 3/10

(54) **DISPOSITIF ET PROCEDE DE CONVERSION D'ENERGIE ET DE STOCKAGE D'ENERGIE D'ORIGINE ELECTRIQUE, SOUS FORME D'AIR COMPRIME.**
VORRICHTUNG UND VERFAHREN ZUR UMWANDLUNG UND SPEICHERUNG ELEKTRISCHER ENERGIE IN FORM VON DRUCKLUFT
DEVICE AND METHOD FOR CONVERTING AND STORING ELECTRIC ENERGY IN THE FORM OF COMPRESSED AIR

(30) Priorité: 01.06.2015 FR 1554931
(43) Date de publication de la demande: 11.04.2018
(73) Titulaire: Segula Engineering France, 92000 Nanterre (FR)
(72) Inventeur: NEU, Thibault, 44690 Chateau Thebaud (FR)
(74) Mandataire: IPAZ
(86) Numéro de dépôt international: PCT/EP2016/062410
(87) Numéro de publication internationale: WO 2016/193322

(56) Documents cités:
- DE-A1-102011 118 206
- GB-A- 2 013 318
- JP-A- H03 294 662
- JP-A- S58 178 878
- US-B1- 7 579 700

## Description

### Domaine technique

La présente invention concerne un dispositif de conversion d'énergie d'origine électrique et de stockage d'énergie sous forme d'air comprimé en utilisant un milieu liquide, en particulier le milieu aquatique.

La présente invention concerne également un procédé de conversion entre les formes d'énergie électrique et respectivement aéraulique.

Un tel dispositif permet de convertir facilement et de manière efficiente de l'énergie électrique en une énergie aéraulique de stockage et inversement pour être distribuée sur le réseau. L'invention s'applique particulièrement au domaine de conversion d'énergie électrique et du stockage de celle-ci une fois convertie sous une forme susceptible d'accumulation durable, en l'occurrence la forme d'air comprimé.

### Etat de la technique antérieure

La production d'électricité est de nos jours un enjeu crucial. Des technologies de production à partir d'énergies renouvelables ont été développées pour d'une part diversifier les sources d'approvisionnement en énergie et d'autre part produire de l'énergie électrique de manière écologique. Cependant, le besoin en électricité des consommateurs ne coïncide pas forcément avec la production d'électricité provenant de sources renouvelables telles que l'énergie solaire ou éolienne. Il se pose alors le problème du stockage de l'énergie électrique lorsque celle-ci ne peut pas être consommée directement par les consommateurs via le réseau de distribution électrique. Or l'électricité ne peut être stockée que convertie sous une autre forme d'énergie, puis doit être reconvertie en électricité lors du déstockage pour alimenter le réseau de distribution électrique lorsque celui-ci devient demandeur. Ces transformations indispensables entre formes d'énergie sont sujettes à des pertes énergétiques qu'il convient de minimiser.

On connaît différents dispositifs de conversion et de stockage d'énergie dans lesquels l'énergie électrique est convertie puis stockée sous forme d'air comprimé. L'électricité provenant typiquement de panneaux solaires ou d'éoliennes est acheminée vers un dispositif se trouvant en partie en surface d'un milieu aquatique et en partie immergé dans ledit milieu aquatique. La transformation de l'énergie électrique est réalisée en utilisant cette électricité comme source d'énergie pour comprimer de l'air que l'on envoie dans un réservoir maintenu sous pression sensiblement constante grâce à la pression hydrostatique régnant à la profondeur d'immersion du réservoir. Pour la compression, plutôt que d'utiliser un compresseur directement entraîné par un moteur électrique, on utilise de préférence un système de pompage d'un liquide qui remplit par le bas une chambre de conversion dans laquelle l'air à comprimer est emprisonné en partie haute. Ce mode de compression a l'avantage d'être quasi-isotherme. Le liquide provient d'un milieu extérieur tel que le milieu aquatique ou provient d'un réservoir. L'air emprisonné est comprimé jusqu'à une pression prédéterminée par le pompage de liquide dans la chambre de conversion, le liquide formant un piston liquide de compression. L'air comprimé est ensuite transféré dans le réservoir de stockage d'air comprimé. Puis le liquide est remplacé par de l'air à basse pression dans la chambre de conversion est un nouveau cycle de conversion peut commencer.

Lorsque le réseau devient demandeur d'énergie électrique, l'énergie stockée sous forme d'air comprimé est reconvertie en électricité. L'air comprimé du réservoir de stockage est transféré dans la chambre de conversion initialement remplie de liquide. L'air comprimé se détend dans la chambre de conversion et refoule le liquide à travers une machine dynamo-hydraulique, telle qu'une turbine, attelée à une génératrice électrique alimentant le réseau.

Le document US 7 579 700 B1 décrit le préambule de la revendication 1.

Toutefois, ces dispositifs présentent des défauts d'efficacité. Les pompes et les turbines travaillent sous très faible différence de pression en début de pompage et en fin de turbinage, et doivent alors assurer un débit très élevé pour que leur puissance soit significative. A l'inverse, en fin de pompage et en début de turbinage, la différence entre la haute et la basse pression de la pompe ou de la turbine est grande et par conséquent le débit beaucoup plus faible, pour une puissance électrique donnée. Or les machines dynamo-hydrauliques (pompes ou turbines ou pompes-turbines réversibles) ne peuvent pas être optimisées pour toutes ces conditions de fonctionnement très variées.

Le problème est compliqué par la nécessité que la conversion d'énergie électrique sous une autre forme ou inversement s'accomplisse d'un point de vue électrique à puissance aussi peu fluctuante que possible afin de faciliter l'absorption ou la restitution de l'énergie électrique sur le réseau.

L'article « Le stockage hydropneumatique d'énergie HyPES » de Dr. Sylvain LEMOFOUET et de Pr. Alfred RUFER, Bulletin 9/2011 Electrosuisse pages 38 à 42, décrit un dispositif de conversion mécanique-pneumatique présentant une chaîne hydropneumatique comprenant plusieurs étages de différentes cylindrées. « Chaque étage est essentiellement constitué d'une motopompe hydraulique à débit variable, d'un module hydraulique de direction et d'une chambre de compression/détente avec échangeur de chaleur intégré. ». Ce dispositif comporte beaucoup d'éléments, son prix et sa maintenance sont relativement élevés, et son montage est complexe.

Le but de la présente invention est de remédier en tout ou partie à l'un au moins des problèmes précités par un nouveau dispositif de conversion d'énergie électrique en énergie pneumatique et inversement.

Un but de l'invention est de réaliser un dispositif avec un bon rapport coût-efficacité.

L'invention a aussi pour but de limiter les pertes énergétiques.

L'invention a aussi pour but de proposer un dispositif fournissant de l'énergie électrique de manière que la fluctuation de puissance due au mode de conversion soit faible.

Encore un autre but de l'invention est de proposer une machine comprenant un nombre réduit de pièces et/ou de composants.

### Exposé de l'invention

Ces objectifs sont atteints avec un dispositif de conversion d'énergie pour convertir de l'énergie électrique en énergie aéraulique et de stockage de celle-ci sous forme d'air comprimé.

Suivant l'invention, le dispositif de conversion d'énergie électrique en énergie aéraulique et inversement et de stockage de celle-ci sous forme d'air comprimé,
le dispositif comprenant :
- des machines dynamo-électriques qui sont en liaison de puissance électrique avec un réseau,
- des machines dynamo-hydrauliques reliées mécaniquement avec les machines dynamo-électriques,
- au moins une chambre de conversion apte d'une part à contenir du liquide pompé par les machines dynamo-hydrauliques fonctionnant en pompes ou recevoir du liquide destiné à alimenter les machines dynamo-hydrauliques fonctionnant en machines de détente, et d'autre part à contenir de l'air, de sorte que le liquide présent dans la chambre forme un piston liquide de compression ou de détente de l'air,
- un réservoir de stockage d'air comprimé à une pression de stockage,
- des moyens de communication aéraulique bidirectionnelle obturables entre les chambres de conversion et le réservoir de stockage,
est caractérisé en ce que chaque machine dynamo-hydraulique est prévue pour fonctionner dans une plage de pression respective à son orifice haute pression pour réaliser le pompage ou la détente hydraulique de manière étagée dans chaque chambre de conversion successivement avec plusieurs desdites machines dynamo-hydrauliques jusqu'à ou respectivement à partir de la pression de stockage désirée, la plage de pressions étant plus étroite que l'écart entre la basse pression et la pression de stockage,
et en ce que des moyens de distribution sont prévus pour raccorder chaque chambre de conversion successivement avec au moins deux machines dynamo-hydrauliques prévues pour fonctionner dans des plages de pression différentes.

Avec l'étagement du pompage ou de la détente hydraulique successivement par au moins deux machines dynamo-électriques différemment calibrées en pression, il est possible d'optimiser chaque machine dynamo-hydraulique pour la plage de pressions dans laquelle elle va fonctionner.

Dans une réalisation, au moins une machine dynamo-hydraulique est prévue pour fonctionner dans une plage de pression étroite correspondant sensiblement à la pression du réservoir de stockage. Etant donné qu'une partie du pompage et une partie de la détente hydraulique se font à pression sensiblement stabilisée pendant les transferts entre réservoir et chambre de conversion, il est avantageux que l'une au moins des machines dynamo-hydrauliques soit calibrée pour cette pression.

Avantageusement, les machines dynamo-hydrauliques sont montées hydrauliquement en parallèle les unes avec les autres entre une source de liquide basse pression et l'au moins une chambre de conversion.

Le réservoir de stockage est de préférence subaquatique et ouvert en partie inférieure pour recevoir de l'eau du milieu aquatique enfermant une poche d'air à une pression définie par la profondeur d'immersion du réservoir. On réalise ainsi de façon simple et fiable un réservoir pouvant avoir une très grande contenance soumis à une pression stable qui peut être sans pièce mobile ni paroi déformable. C'est le niveau de l'eau dans le réservoir qui sert de paroi déformable s'ajustant en fonction de la quantité d'air comprimé stockée.

Typiquement, pour réaliser la conversion de l'énergie électrique en énergie aéraulique et inversement, il est prévu plusieurs cycles respectivement de pompage ou de turbinage, chaque cycle passant par les plages de pression successives. On peut ainsi utiliser une chambre de conversion bien plus petite, par exemple 100 fois plus petite que le réservoir de stockage.

Dans une réalisation, le dispositif comprend au moins deux chambres de conversion afin de maintenir en permanence le flux énergétique dans les machines dynamo-hydrauliques. Quand une chambre de conversion est en phase de réarmement (vidange d'eau en vue d'un nouveau cycle de compression ou remplissage d'eau en vue d'un nouveau cycle de détente), l'autre peut continuer à être énergétiquement active.

Avantageusement, les cycles de variation de niveau de liquide dans les chambres de conversion sont déphasés entre chambres de conversion, chaque machine dynamo-hydraulique étant raccordée successivement à plusieurs chambres de conversion se trouvant de manière décalée dans le temps dans la plage de pression correspondant à cette machine dynamo-hydraulique. On peut ainsi faire en sorte que les machines dynamo-hydrauliques fonctionnent de façon quasi-permanente ou permanente successivement avec les différentes chambres de conversion.

Selon un mode de réalisation, il est prévu une pause au moment où l'au moins une chambre de conversion passe d'une machine dynamo-hydraulique à une autre.

Des moyens de réajustement hydraulique, en particulier des pompes basse pression peuvent être prévues pour réajuster le niveau de liquide à son état initial pour réaliser le pompage ou le turbinage dans l'au moins une chambre de conversion.

De préférence, le dispositif comprend davantage de chambres de conversion que de machines dynamo-hydrauliques. A chaque instant les chambres de conversion qui ne sont reliées à aucune machine dynamo-hydraulique peuvent être en phase de réarmement, ou en phase de pause entre deux étages de compression ou de détente.

Dans un mode de réalisation préféré, les machines dynamo-hydrauliques sont du type pompe-turbine apte à fonctionner en pompe ou inversement en turbine. Elles sont de façon encore plus préféré du type Kaplan ou Dériaz.

Préférentiellement, les machines dynamo-électriques sont des moteurs générateurs réversibles, fonctionnant en moteurs pour le stockage d'énergie aéraulique dans le réservoir et en générateur pour la production d'électricité lors du déstockage aéraulique.

Avantageusement les moyens de communication bidirectionnelle sont fermés sauf pendant une phase finale de la compression et pendant une phase initiale de la détente.

Suivant un second aspect de l'invention le procédé de conversion d'énergie électrique en énergie aéraulique et inversement dans lequel :
- on pompe un liquide formant piston liquide dans une chambre de conversion dans laquelle est emprisonnée une quantité d'air jusqu'à que cet air atteigne une pression d'un réservoir de stockage d'air comprimé puis on transfère l'air comprimé de la chambre de conversion vers le réservoir de stockage, et/ou
- on turbine un liquide en admettant de l'air comprimé dans une chambre de conversion contenant une quantité de liquide de sorte que le liquide est refoulé à travers une turbine,
est caractérisé en ce que le pompage ou le turbinage du liquide s'effectue successivement au moins en deux étages de pompage ou respectivement de turbinage prévus pour avoir lieu dans des plages de pressions différentes.

Dans une version préférée du procédé, lors du turbinage et après avoir admis une quantité d'air comprimé dans la chambre de conversion contenant encore de l'eau, on ferme l'arrivée d'air comprimé provenant du réservoir de stockage, et on détend l'air comprimé présent dans la chambre de conversion alors que le liquide restant est refoulé pour être turbiné. On peut ainsi détendre de façon aussi complète que désiré chaque quantité élémentaire d'air comprimé admise dans la chambre de conversion à chaque cycle, et ce avec un excellent rendement énergétique grâce à la détente étagée selon l'invention.

De préférence :
- on pompe le liquide par des machines dynamo-hydrauliques entraînées par au moins un moteur électrique fonctionnant avec l'énergie électrique issue d'un réseau électrique,
- on turbine le liquide par des machines dynamo-hydrauliques qui entraînent un générateur électrique pour produire de l'énergie électrique restituée au réseau.

Dans une version du procédé :
- lors du pompage et après avoir transféré l'air comprimé dans le réservoir de stockage, on vidange le liquide contenu dans la chambre de conversion,
- lors du turbinage et après avoir détendu l'air contenu dans la chambre de conversion, on remplit de nouveau en liquide ladite chambre.

On fait de préférence en sorte que la compression de l'air et/ou la détente de l'air dans l'au moins une chambre de conversion soit quasi-isotherme. Par exemple on place des conducteurs thermiques verticalement dans les chambres de conversion pour qu'ils transfèrent à l'eau les calories générées dans l'air par la compression, et qu'ils transfèrent à l'air des calories prélevées dans l'eau lors de la détente. Ces conducteurs peuvent être un faisceau de tubes verticaux ouverts aux deux extrémités et s'étendant sur sensiblement toute la hauteur de la chambre de conversion.

Optionnellement, le dispositif peut comprendre des super-capacités pour réguler la puissance que le dispositif échange avec le réseau.

Il peut être également prévu de stocker l'énergie au sein d'un cycle via l'énergie cinétique stockée sur l'arbre moteur. L'emploi d'une partie de l'énergie cinétique disponible dans la rotation existante des machines tournantes (par exemple en phase de stockage, les moteurs et pompes) est envisagé. Une masse tournante supplémentaire pourra également être ajoutée sur l'arbre de transmission mécanique afin d'augmenter ce stockage d'énergie cinétique au sein d'un cycle.

En outre il est possible de réutiliser le liquide d'un cycle pour réaliser d'autres cycles avec la même masse de liquide. Cette caractéristique permet de réaliser des conversions d'énergie de manière plus écologique en limitant les volumes d'eau captés et rejetés par le dispositif.

### Description des figures et modes de réalisation

D'autres particularités et avantages de l'invention apparaîtront à la lecture de la description détaillée de mises en oeuvre et de modes de réalisation nullement limitatifs, et des dessins annexés suivants :
- la figure 1 est une vue schématique du dispositif de conversion d'énergie électrique en énergie aéraulique ;
- la figure 2 est un schéma de raccordement des différents éléments du dispositif de conversion d'énergie selon un mode de réalisation préféré de l'invention ;
- la figure 3 est un schéma de principe du fonctionnement du dispositif dans le cas d'une conversion d'énergie électrique en énergie aéraulique ;
- la figure 4 est un schéma de principe du fonctionnement du dispositif dans le cas d'une conversion d'énergie aéraulique en énergie électrique ;
- la figure 5 est un tableau présentant l'organisation temporelle du raccordement des chambres de conversion aux machines dynamo-hydrauliques et à des moyens de réajustement, selon un mode de réalisation préféré ;
- la figure 6 est un tableau présentant l'organisation temporelle du raccordement des chambres de conversion aux machines dynamo-hydrauliques et aux moyens de réajustement, selon un second mode de réalisation préféré ; et
- la figure 7 est un chronogramme des puissances hydrauliques correspondant au tableau de la figure 6.

Ces modes de réalisation n'étant nullement limitatifs, on pourra notamment considérer des variantes de l'invention ne comprenant qu'une sélection de caractéristiques décrites par la suite, isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, et/ou avec seulement une partie des détails structurels si cette partie uniquement est suffisante pour conférer un avantage technique ou à différencier l'invention par rapport à l'état de la technique antérieure.

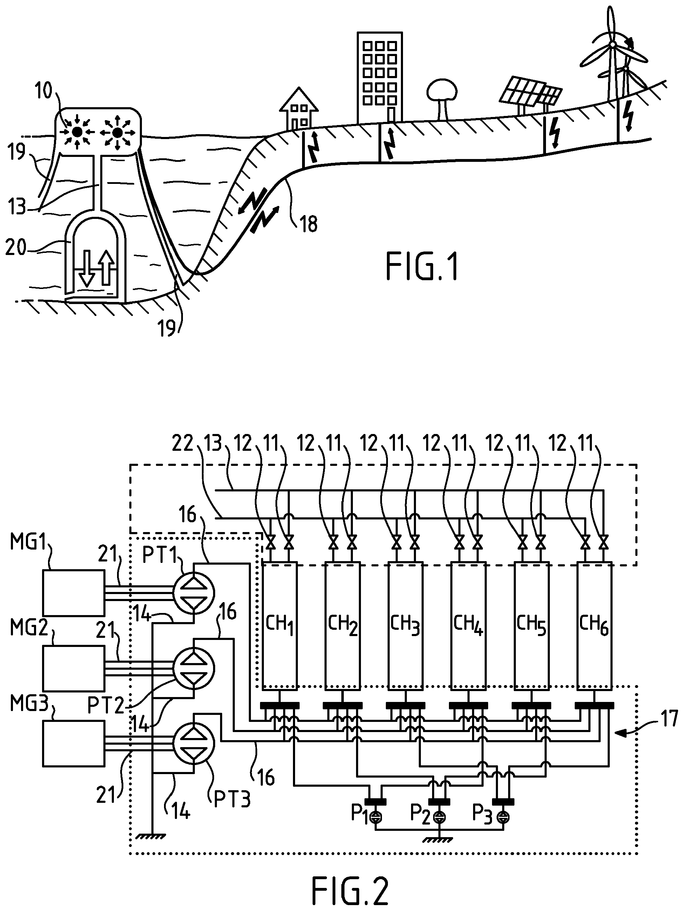

On va tout d'abord décrire en référence aux figures 1 et 2 un dispositif de conversion d'énergie électrique en énergie aéraulique et inversement. L'un des modes de réalisation préférés est un dispositif de conversion et de stockage d'énergie électrique en mer. Il a pour objectif d'absorber les excédents électriques pour les convertir et stocker sous forme d'énergie aéraulique, puis lorsque le réseau devient demandeur reconvertir l'énergie aéraulique en énergie électrique pour la restituer au réseau. Entre ces deux phases actives, l'énergie est stockée sous forme d'air comprimé dans au moins un réservoir de stockage subaquatique, typiquement sous-marin, 20 à une pression de stockage.

Selon un mode de réalisation préféré et en référence à la figure 1, le réservoir de stockage sous-marin 20 est ouvert en partie inférieure pour communiquer avec le milieu aquatique et enfermer en partie supérieure, au-dessus du niveau d'eau dans le réservoir, une poche d'air comprimé à une pression désirée définie par la profondeur d'immersion du réservoir. De préférence, le réservoir est constitué de plusieurs cellules contiguës et solidaires. Typiquement, le réservoir est posé sur le fond de l'étendue d'eau, typiquement le fond marin. Une profondeur d'immersion typique est comprise entre 70 et 200 m, de préférence de l'ordre de 100 m.

En référence à la figure 1, le dispositif de conversion d'énergie est placé sur une plateforme flottante 10. La plateforme flottante regroupe les systèmes de conversion électromécanique, hydromécanique et hydropneumatique ainsi que les systèmes électriques et électroniques associés pour permettre la conversion d'énergie électrique en énergie pneumatique (qu'on appelle aussi aéraulique) et inversement. Un synoptique des principaux de ces équipements est représenté en figure 2. La plateforme est reliée au réseau électrique par câble électrique sous-marin à haute tension 18. Le maintien de la position de la plateforme en surface au-dessus des réservoirs 20 de stockage de l'air comprimé est réalisé à l'aide d'un ensemble de lignes d'ancrage permanentes 19.

Le dispositif de conversion d'énergie comprend des machines dynamo-électriques MG1, MG2, MG3 prévues pour fonctionner en moteur absorbant l'énergie électrique à convertir provenant de l'installation du réseau et la transformer en énergie mécanique et/ou pour fonctionner en générateur utilisant de l'énergie mécanique produit à partir de l'énergie aéraulique stockée dans le réservoir 20 pour transformer cette énergie mécanique en énergie électrique stockée à restituer au réseau. Selon un mode de réalisation préféré, les machines dynamo-électriques MG1, MG2, MG3 sont des moteurs générateurs réversibles.

Le schéma de la figure 2 est décomposé en deux parties : une partie encadrée de pointillées fins qui correspond à une partie purement hydraulique et une partie encadrée de traits discontinus qui correspond à une partie purement aéraulique.

En référence à la figure 2, le dispositif comprend des machines dynamo-hydrauliques PT1, PT2 et PT3 pour respectivement pomper ou turbiner de l'eau. Dans l'exemple non-limitatif mais préférentiel, les machines dynamo-hydrauliques PT1, PT2 et PT3 sont des machines réversibles capables de fonctionner soit en pompes, en particulier turbopompes, soit en machines de détente, en particulier turbines. Mais l'invention est applicable en utilisant des machines spécifiques pour le pompage et pour la détente, respectivement.

L'arbre de chaque machine dynamo-hydraulique PT1, PT2, PT3 est attelé à l'arbre de l'une respective des machines dynamo-électrique MG1, MG2, MG3, comme représenté par les références 21. Les machines dynamo-hydrauliques fonctionnant en pompage permettent de convertir l'énergie mécanique issue des machines dynamo-électriques fonctionnant en moteur, en énergie hydraulique par le pompage d'un liquide puisé dans une source telle que l'eau du milieu aquatique environnant et refouler ce liquide à une pression accrue par le pompage dans un orifice de refoulement 16. Les machines dynamo-hydrauliques fonctionnant en machine de détente hydraulique, en particulier de turbinage, permettent de convertir l'énergie hydraulique en énergie mécanique fournie à l'arbre de la machine dynamo-électrique fonctionnant en générateur, par le turbinage du liquide arrivant sous une certaine pression à l'orifice haute pression 16 et quittant la machine dynamo-hydraulique par son orifice basse pression 14 pour retourner à la bâche, en particulier le milieu aquatique environnant.

De préférence, les machines dynamo-hydrauliques peuvent être des pompes-turbines du type Kaplan ou Dériaz. Ces pompes-turbines permettent de faire varier leur débit à vitesse constante ce qui permet notamment de tendre vers une uniformisation de la puissance malgré la variation de la pression en cours de compression de l'air, et ainsi de limiter la variation de puissance électrique vue par les machines électriques.

Le dispositif comprend des chambres de conversion CH1, CH2, CH3, CH4, CH5, CH6 ayant chacune un orifice inférieur apte à être raccordé à l'orifice haute pression 16 des machines dynamo-hydrauliques PT1, PT2, PT3 par un système de vannes de distribution 17, un orifice supérieur apte à être raccordé par une vanne 11 à la conduite de communication bidirectionnelle 13 avec le réservoir 20, et un orifice supérieur apte à être raccordé à l'air libre par une vanne 12 et une conduite de remplissage-vidange 22. D'une manière générale chaque chambre de conversion contient de l'air en partie haute et du liquide de travail, typiquement de l'eau du milieu aquatique, en partie basse. L'eau présente dans la chambre en partie basse forme un piston liquide de compression ou de détente de l'air. La chambre de conversion permet de convertir de l'énergie hydraulique en énergie pneumatique et inversement. Les compressions et détentes de l'air sont réalisées à l'intérieur des chambres de conversion. De préférence, il est prévu suffisamment de chambres de conversion pour maintenir en permanence le flux énergétique même pendant qu'au moins une chambre de conversion est en phase de remplissage ou vidange de son eau. En particulier, le dispositif comprend davantage de chambres de conversion que de machines dynamo-hydrauliques PT1, PT2, PT3 capables de fonctionner en pompe et davantage de chambres de conversion que de machines dynamo-hydrauliques PT1, PT2, PT3 capables de fonctionner en machines de détente hydraulique. Cette caractéristique permet de maintenir en activité toutes les machines dynamo-hydrauliques fonctionnant selon le cas en pompes ou en turbines même pendant le remplissage ou la vidange d'au moins une chambre de conversion. Dans l'exemple il y a deux fois plus de chambres de conversion que de machines dynamo-hydrauliques, donc plus particulièrement six chambres de conversion CH1 - CH6 pour trois machines dynamo-hydrauliques PT1, PT2, PT3 réversibles.

Le dispositif comprend en outre des moyens de réajustement hydraulique P1, P2, P3 pour réajuster le niveau de liquide à son état initial pour réaliser le pompage ou le turbinage dans les chambres de conversion. Ils prélèvent le liquide à la même source que les machines dynamo-hydrauliques PT1, PT2, PT3, dans l'exemple le milieu aquatique environnant, et restituent le liquide à ladite source. De préférence, les moyens de réajustement sont des pompes (P1, P2 et P3) qui fonctionnent à faible différence de pression, juste suffisante pour équilibrer les pertes de charge et l'éventuel différentiel de pression hydrostatique résultant de la hauteur d'eau dans les chambres de conversion par rapport au niveau de la source. De préférence, les moyens de réajustement sont des pompes bidirectionnelles également capables de vidanger ou accélérer la vidange des chambres de conversion lorsque celles-ci doivent être remplies d'air préalablement à un cycle de compression. Les moyens de distribution 17 sont conçus pour assurer également le raccordement sélectif de chaque chambre de conversion CH1 - CH6 avec une pompe de réajustement P1, P2 ou P3.

Suivant l'invention, les moyens dynamo-hydrauliques de pompage et de détente hydraulique comprennent des machines PT1, PT2, PT3 qui diffèrent les unes des autres par leur plage de pression respective mesurée en fonctionnement à leur orifice haute pression 16, et qui diffèrent également par leur débit maximal.

Il y a au moins deux machines dynamo-hydrauliques, l'une pour les pressions modérées et les forts débits en début de pompage et en fin de turbinage, l'autre pour des pressions plus élevées et des débits plus faibles en phase plus avancée de pompage ou en phase plus précoce de turbinage.

Dans l'exemple représenté, il y a trois machines différentes, à savoir :
- une machine PT1 pour le début de la montée en pression pendant le pompage et la fin de la descente en pression pendant le turbinage, fonctionnant dans une plage de pressions modérée et une plage de débits élevés ;
- une machine PT2 pour la fin de la montée en pression pendant le pompage et le début de la descente en pression pendant le turbinage, fonctionnant dans une plage de pressions élevées et une plage de débits modérés ; et
- une machine PT3 pour le refoulement de l'air comprimé dans le réservoir 20 en fin de cycle de stockage et l'admission de l'air comprimé 20 dans la chambre de conversion en début de cycle de déstockage, fonctionnant dans une plage de pressions étroite proche de la pression du réservoir 20 et une plage de débits étroite correspondante.

Il est en outre prévu de déphaser entre eux les cycles respectifs des chambres de conversion CH1 - CH6 de façon qu'en permanence les machines dynamo-hydrauliques et les machines dynamo-électriques associées soient en fonctionnement actif de conversion avec l'une ou l'autre des chambres de conversion se trouvant à ce moment-là dans la plage de pression correspondante.

On va maintenant exposer le fonctionnement du dispositif et compléter en même temps la description du dispositif et du procédé.

### Phase de stockage

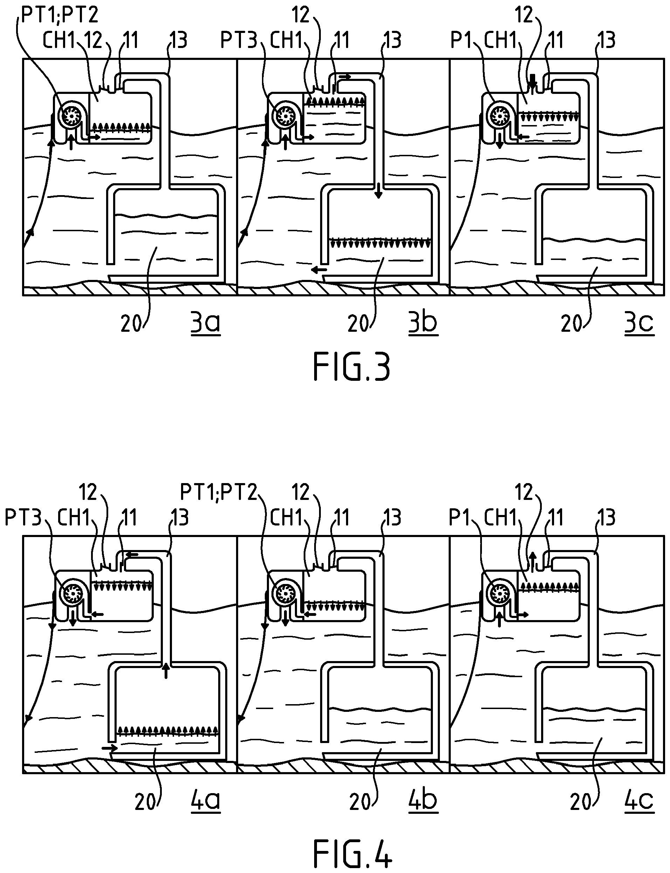

En référence à la figure 3, on va décrire le fonctionnement du dispositif lors de la conversion de l'énergie électrique en énergie aéraulique dans la chambre de conversion CH1. La figure 3 comporte trois fenêtres 3a, 3b, 3c présentant respectivement les étapes caractéristiques de la phase de stockage pour une chambre de conversion. Les fenêtres 3a et 3b correspondent aux étapes productives et la fenêtre 3c correspond à une étape non-productive, qu'on pourrait appeler étape de réarmement.

Au départ (fenêtre 3a), la chambre de conversion CH1 est pleine d'air à pression atmosphérique, l'eau est à un niveau minimal. Les vannes de communication bidirectionnelle 11 et de mise à l'air 12 sont fermées de sorte que la partie supérieure de la chambre de conversion, occupée par l'air, est hermétiquement fermée. L'énergie électrique à stocker alimente la machine dynamo-électrique MG1 couplée à la machine dynamo-hydraulique PT1 qui pompe l'eau dans la chambre de conversion CH1 sous une pression modérée.

A un certain stade intermédiaire de remplissage en eau de la chambre de conversion CH1, correspondant sensiblement à la pression maximale pour laquelle est prévue la machine dynamo-hydraulique PT1, les moyens de distribution 17 interrompent la liaison de la chambre de conversion CH1 avec la machine dynamo-hydraulique PT1 et établissent le raccordement de la chambre de conversion avec l'orifice haute pression 16 de la machine dynamo-hydraulique PT2 attelée à la machine dynamo-électrique MG2. L'énergie électrique à stocker alimente la machine dynamo-électrique MG2 couplée à la machine dynamo-hydraulique PT2 qui pompe l'eau dans la chambre de conversion CH1 sous une pression accrue.

Lorsqu'est ensuite atteint un autre stade intermédiaire de remplissage en eau de la chambre de conversion CH1, correspondant sensiblement à la pression maximale pour laquelle est prévue la machine dynamo-hydraulique PT2, les moyens de distribution 17 interrompent la liaison de la chambre de conversion CH1 avec la machine dynamo-hydraulique PT2 et établissent le raccordement de la chambre de conversion avec l'orifice haute pression 16 de la machine dynamo-hydraulique PT3 attelée à la machine dynamo-électrique MG3. En même temps la vanne 11 s'ouvre fenêtre 3b de la figure 3). L'énergie électrique à stocker alimente la machine dynamo-électrique MG3 couplée à la machine dynamo-hydraulique PT3 qui pompe l'eau dans la chambre de conversion CH1 sous la pression du réservoir de stockage 20 jusqu'à ce que sensiblement tout l'air comprimé présent dans la chambre de conversion CH1 ait été refoulé dans le réservoir 20.

Grâce aux moyens dynamo-hydrauliques, on pompe le liquide, typiquement l'eau du milieu aquatique, pour former un piston liquide dans la chambre de conversion dans laquelle est emprisonnée une quantité d'air. En référence aux fenêtres 3a et 3b, l'interface eau/air se déplace de bas en haut de la chambre de conversion en formant piston comprimant l'air emprisonné dans la chambre de conversion jusqu'à que cet air atteigne la pression régnant dans le réservoir de stockage.

Le piston liquide a pour avantage de limiter les pertes énergétiques dues aux frottements par rapport à un compresseur à piston traditionnel rigide. De plus l'emploi du piston liquide permet de limiter les pertes thermiques c'est-à-dire à limiter l'échauffement dû à la compression, laquelle est de ce fait quasi-isotherme. Pour renforcer cette caractéristique de quasi-isothermie, les chambres de conversion renferment de préférence des conducteurs thermiques qui relient thermiquement l'air et le liquide dans les chambres de conversion. Ces conducteurs thermiques sont par exemple un faisceau de tubes métalliques verticaux, ouverts aux deux extrémités, s'étendant sur sensiblement toute la hauteur de chaque chambre. Ces conducteurs évacuent dans l'eau la chaleur de compression de l'air en cycle de compression, ce qui réduit le travail nécessaire pour la compression, et réchauffent l'air avec de la chaleur provenant de l'eau en cycle de détente, ce qui augmente le travail fourni par la détente de l'air.

Par exemple, pour un stockage d'air dans un réservoir de stockage placé à 100 mètres de profondeur, donc soumis à une pression hydrostatique absolue d'environ 1,1 MPa, la machine dynamo-hydraulique PT1 fonctionne dans la plage des faibles pressions (pression atmosphérique jusqu'à 0,3 ou 0,4 MPa), la machine dynamo-hydraulique PT2 fonctionne dans la plage de pression intermédiaire (de 0,3 à 0,4 MPa jusqu'à 1,1 MPa) et la machine dynamo-hydraulique PT3 fonctionne dans une plage étroite autour de 1,1 Mpa.

Ensuite en référence à la fenêtre 3c de la figure 3, un temps non productif permet la vidange de l'eau contenue dans la chambre de conversion CH1 pour pouvoir recommencer un cycle de stockage dans cette chambre. La vanne de communication bidirectionnelle 11 est alors fermée et la vanne de mise à l'air 12 est ouverte. Les moyens de réajustement hydraulique sont actionnés pour vidanger la chambre de conversion jusqu'à la vider de la quasi-totalité de son eau.

De cette manière, le dispositif de conversion réalise plusieurs cycles de pompage, chaque cycle passant par les plages de pression successive. La durée d'un cycle est prévue entre 30 secondes et 5 minutes.

### Phase de déstockage

En référence à la figure 4, on va décrire le fonctionnement du dispositif lors de la conversion de l'énergie pneumatique en énergie électrique. La figure 4 comporte trois fenêtres 4a, 4b, 4c présentant respectivement les étapes caractéristiques de la phase de déstockage pour une chambre de conversion CH1. Les fenêtres 4a et 4b correspondent aux étapes productives et la fenêtre 4c correspond à une étape non-productive ou de réarmement.

Au départ (fenêtre 4a), la chambre de conversion est pleine d'eau. Les moyens de mise à l'air 12 sont fermés. Pour le déstockage, on ouvre la vanne de communication bidirectionnelle 11 de sorte que l'air comprimé présent dans le réservoir de stockage 20 est en partie transféré vers la chambre de conversion CH1 et refoule une partie de l'eau contenue dans la chambre de conversion à travers la machine dynamo-hydraulique haute pression PT3 fonctionnant en turbine entraînant la machine dynamo-électrique MG3 fonctionnant en générateur.

Lorsque la quantité d'air présente dans la chambre de conversion CH1 est telle que cet air est capable d'occuper tout le volume de la chambre de conversion s'il est détendu à la pression atmosphérique, on ferme la vanne de communication bidirectionnelle 11 (fenêtre 4b de la figure 4). En même temps les moyens de distribution 17 interrompent la liaison de la chambre de conversion CH1 avec la machine dynamo-hydraulique PT3 et établissent la liaison de la chambre de conversion avec la machine dynamo-hydraulique PT2. L'air se détend de façon quasi-isotherme en continuant de refouler l'eau mais maintenant à travers la machine dynamo-hydraulique PT2, dédiée aux moyennes pressions, puis après un nouveau basculement opéré par les moyens de distribution 17, à travers la machine dynamo-hydraulique PT1 dédiée aux pressions modérées.

Il est prévu d'agir sur les machines dynamo-hydrauliques pour permettre la variation dynamique de certaines grandeurs physiques (comme la vitesse de rotation de la machine, l'angle des pales, la position du distributeur...). Il est ainsi possible de réguler le débit des machines dynamo-hydrauliques afin que la machine dynamo-électrique associée fonctionne à puissance constante. Cette régulation a pour avantage d'améliorer la stabilité de la puissance du dispositif et donc de limiter les variations de la puissance électrique échangée entre le dispositif et le réseau de distribution électrique.

Ensuite en référence à la fenêtre 4c de la figure 4, un temps non productif ou de réarmement permet le remplissage en eau de la chambre de conversion pour recommencer un cycle de déstockage. La vanne de communication bidirectionnelle 11 est alors fermée et la vanne de mise à l'air 12 est ouverte pour permettre l'ajout de l'eau. Les moyens de réajustement hydraulique P1 sont raccordés à la chambre de conversion CH1 par les moyens de distribution 17 et actionnés pour remplir en eau la chambre de conversion.

De cette manière, le dispositif de conversion réalise plusieurs cycles de turbinage, chaque cycle passant par les plages de pression successives. La durée d'un cycle est prévue entre 30 secondes et 5 minutes.

### Organisation temporelle du raccordement des machines dynamo-hydrauliques avec les chambres de conversion

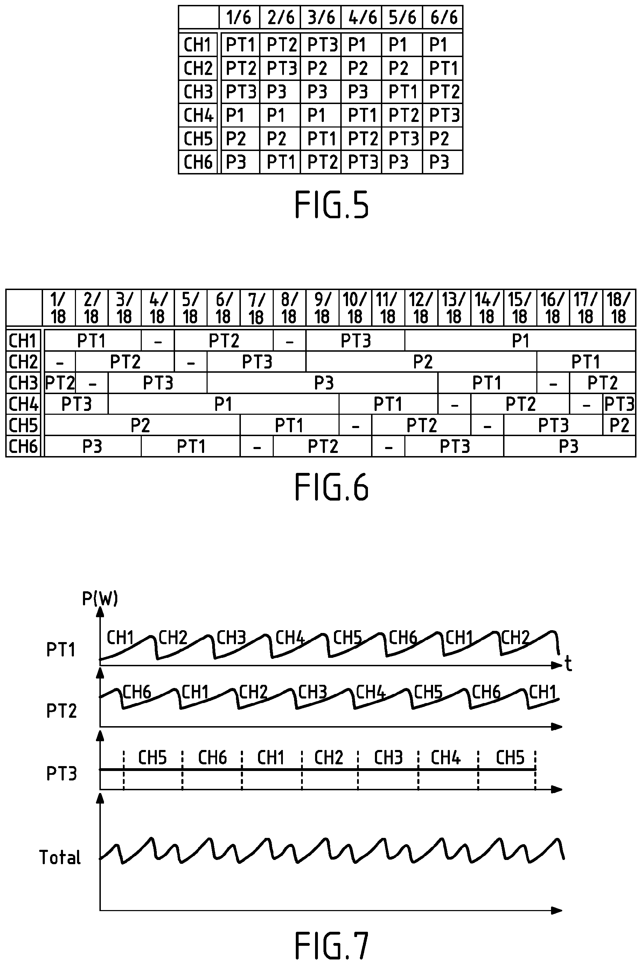

En référence aux figures 5 à 7, les cycles de pompage ou de turbinage de chaque chambre de conversion sont décalés temporellement de sorte qu'à chaque instant donné chaque machine dynamo-hydraulique est raccordée à une chambre de conversion se trouvant dans la phase de pompage ou de turbinage correspondante. Autrement dit dans l'exemple à trois plages de pression il y a à tout moment trois chambres de conversion se trouvant l'une dans la plage de pressions modérées, l'autre dans la plage de pressions intermédiaires et la troisième dans la plage de pression supérieure, cette dernière communiquant avec le réservoir de stockage 20.

Le tableau de la figure 5 représente un exemple de l'organisation temporelle du raccordement des machines dynamo-hydrauliques avec les chambres de conversion sur un cycle, dans l'exemple de trois pompes et/ou turbines et six chambres de conversion. Chaque chambre de conversion (CH1, CH2, CH3, CH4, CH5, CH6) est reliée successivement aux trois machines dynamo-hydrauliques PT1, PT2, PT3 (dans l'exemple du pompage) avant d'être reliée à l'un des moyens de réajustement P1, P2 ou P3. Un cycle complet (2 fois la durée d'une compression ou d'une détente pour une chambre) y est représenté dont chaque colonne représente une durée de 1/6 du cycle. Dans cette organisation, chaque pompe et/ou turbine effectue son travail de manière synchrone sur les chambres. Leur commutation d'une chambre à une autre est également effectuée en même temps. Cette organisation participe à limiter les variations de puissance électrique échangée entre le dispositif de conversion et le réseau de distribution. En outre, cela permet de limiter les pertes énergétiques d'ordre thermique.

Selon un autre mode de réalisation et en référence aux figures 6 et 7, il est prévu d'introduire un déphasage entre les instants de passage d'une pompe-turbine à une autre dans une chambre, de sorte que les commutations hydrauliques, correspondant à des ruptures de puissance, ne soient plus simultanés. Le tableau de la figure 6 montre un exemple de déphasage de 1/18 de la durée d'un cycle entre chaque pompe et/ou turbine. Le fonctionnement sensiblement continu des pompes et/ou turbines est conservé, mais il existe à présent une pause pour chaque chambre et pour chaque passage d'une pompe et/ou turbine à l'autre dans chaque chambre de conversion. Ayant conservé le même nombre de chambres de conversion, le temps disponible pour remettre la chambre dans son état initial (par P1, P2 ou P3) est réduit de la durée des pauses réalisées.

De cette manière, les fluctuations de puissance sont d'autant plus limitées. En référence à la figure 7, il est présenté un exemple de chronogramme des puissances hydrauliques envisagées en compression pour un dispositif à trois pompes et dont la dernière travaille uniquement à pression et à puissance constante. Un déphasage de 1/12 de cycle est présent entre la pompe 1 et les pompes 2 et 3. Les pompes 1 et 2 permettent d'atteindre la pression de stockage et la pompe 3 permet le refoulement de l'air comprimé vers le réservoir. Le déphasage des commutations des pompes permet de limiter les fluctuations de la puissance hydraulique totale résultante et permet donc de limiter les fluctuations de puissance électrique totale.

Bien sûr, l'invention n'est pas limitée aux exemples qui viennent d'être décrits et de nombreux aménagements peuvent être apportés à ces exemples sans sortir du cadre de l'invention.

Bien entendu, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

Il a été présenté des exemples de réalisation avec trois machines dynamo-hydrauliques PT1, PT2 et PT3 pouvant être trois pompes et trois turbines distinctes ou pouvant être trois pompes-turbines. Le dispositif peut comprendre un nombre de pompes et/ou de turbines différent de trois. Selon d'autres modes de réalisation, il est prévu que les pompes et les machines de détente soient en nombres différents.

Un ou des systèmes supplémentaires, par exemple des condensateurs électriques, pourront être ajoutés afin de lisser la puissance électrique consommée (ou fournie pour le déstockage).

De même, le nombre de chambre de conversion peut être différent de celui indiqué dans l'exemple. Il est cependant souhaitable d'en avoir au minimum une de plus que le nombre de pompes ou de turbines. Le nombre de chambres n'est pas forcément un multiple du nombre de pompes et/ou turbines.

Concernant les moyens de réajustement, il peut être envisagé l'utilisation d'une ou plusieurs autres technologies, combinées ou non pour effectuer le remplissage ou la vidange des chambres de conversion. Il peut notamment être cité l'utilisation d'éjecteurs hydrauliques, l'utilisation naturelle de la gravité ou la récupération d'énergie potentielle présente dans une autre chambre.

Les moyens de communication bidirectionnelle peuvent comporter des trajets séparés pour l'air allant au réservoir de stockage 20 et venant du réservoir de stockage 20, avec éventuellement chacun sa vanne à la place de la vanne commune 11.

## Revendications

1. Dispositif de conversion d'énergie pour convertir de l'énergie électrique en énergie aéraulique et inversement, et de stockage de celle-ci sous forme d'air comprimé,
le dispositif comprenant :
- des machines dynamo-électriques (MG1, MG2, MG3) qui sont en liaison de puissance électrique avec un réseau,
- des machines dynamo-hydrauliques (PT1, PT2, PT3) reliées mécaniquement avec les machines dynamo-électriques,
- au moins une chambre de conversion (CH1, CH2, CH3) apte d'une part à contenir du liquide pompé par les machines dynamo-hydrauliques fonctionnant en pompes ou à recevoir du liquide destiné à alimenter les machines dynamo-hydrauliques fonctionnant en machines de détente, et d'autre part à contenir de l'air, de sorte que le liquide présent dans la chambre forme un piston liquide de compression ou de détente de l'air,
- un réservoir de stockage (20) d'air comprimé à une pression de stockage,
- des moyens de communication aéraulique bidirectionnelle (11, 13) obturables entre les chambres de conversion (CH1 - CH6) et le réservoir de stockage (20),
**caractérisé en ce que** chaque machine dynamo-hydraulique (PT1, PT2, PT3) est prévue pour fonctionner dans une plage de pression respective à son orifice haute pression (16) pour réaliser le pompage ou la détente hydraulique de manière étagée dans chaque chambre de conversion successivement avec plusieurs desdites machines dynamo-hydrauliques jusqu'à ou respectivement à partir de la pression de stockage désirée, la plage de pressions étant plus étroite que l'écart entre la basse pression et la pression de stockage,
**et en ce que** des moyens de distribution (17) sont prévus pour raccorder chaque chambre de conversion successivement avec au moins deux machines dynamo-hydrauliques prévues pour fonctionner dans des plages de pression différentes.

2. Dispositif selon la revendication 1, **caractérisé en ce qu'**au moins une machine dynamo-hydraulique (PT3) est prévue pour fonctionner dans une plage de pression étroite correspondant sensiblement à la pression du réservoir de stockage (20).

3. Dispositif selon la revendication 1 ou 2, **caractérisé en ce que** les machines dynamo-hydrauliques (PT1, PT2, PT3) sont montées hydrauliquement en parallèle les unes avec les autres entre une source de liquide basse pression et l'au moins une chambre de conversion (CH1, CH2, CH3).

4. Dispositif selon l'une des revendications 1 à 3, **caractérisé en ce que** le réservoir de stockage (20) est subaquatique et ouvert en partie inférieure pour recevoir de l'eau du milieu aquatique enfermant une poche d'air à une pression définie par la profondeur d'immersion du réservoir.

5. Dispositif selon l'une des revendications précédentes, **caractérisé en ce qu'**il est prévu pour réaliser la conversion de l'énergie électrique en énergie aéraulique et inversement plusieurs cycles respectivement de pompage ou de turbinage chaque cycle passant par les plages de pression successive.

6. Dispositif selon l'une des revendications précédentes, **caractérisé en ce qu'**il comprend au moins deux chambres de conversion (CH1, CH2, CH3) afin de maintenir en permanence le flux énergétique dans les machines dynamo-hydrauliques (PT1, PT2, PT3).

7. Dispositif selon la revendication 6, **caractérisé en ce que** les cycles de variation de niveau de liquide dans les chambres de conversion (CH1, CH2, CH3) sont déphasés entre chambres de conversion, chaque machine dynamo-hydraulique (PT1, PT2, PT3) étant raccordée successivement à plusieurs chambres de conversion se trouvant de manière décalée dans le temps dans la plage de pression correspondant à cette machine dynamo-hydraulique.

8. Dispositif selon l'une des revendications précédentes, **caractérisé en ce qu'**il est prévu une pause au moment où l'au moins une chambre de conversion passe d'une machine dynamo-hydraulique (PT1, PT2, PT3) à une autre.

9. Dispositif selon l'une des revendications précédentes, **caractérisé en ce qu'**il comprend des moyens de réajustement hydraulique (P1, P2, P3) pour réajuster le niveau de liquide à son état initial pour réaliser le pompage ou le turbinage dans l'au moins une chambre de conversion (CH1, CH2, CH3).

10. Dispositif selon l'une des revendications précédentes, **caractérisé en ce qu'**il comprend davantage de chambres de conversion (CH1, CH2, CH3) que de machines dynamo-hydrauliques (PT1, PT2, PT3).

11. Dispositif selon l'une des revendications précédentes, **caractérisé en ce que** les machines dynamo-hydrauliques (PT1, PT2, PT3) sont du type pompe-turbine apte à fonctionner en pompe ou inversement en turbine.

12. Dispositif selon la revendication précédente, **caractérisé en ce que** les machines dynamo-hydrauliques (PT1, PT2, PT3) sont des pompes-turbines du type Kaplan ou Dériaz.

13. Dispositif selon l'une des revendications précédentes, **caractérisé en ce que** les machines dynamo-électriques (MG1, MG2, MG3) sont des moteurs générateurs réversibles.

14. Dispositif selon l'une des revendications 1 à 13, **caractérisé en ce que** les moyens de communication bidirectionnelle (11, 13) sont fermés sauf pendant une phase finale de la compression et pendant une phase initiale de la détente.

15. Procédé de conversion d'énergie électrique en énergie aéraulique et inversement dans lequel :
- on pompe un liquide formant piston liquide dans une chambre de conversion (CH1, CH2, CH3) dans laquelle est emprisonnée une quantité d'air jusqu'à que cet air atteigne une pression d'un réservoir de stockage (20) d'air comprimé puis on transfère l'air comprimé de la chambre de conversion vers le réservoir de stockage (20), et/ou
- on turbine un liquide en admettant de l'air comprimé dans une chambre de conversion (CH1, CH2, CH3) dans contenant une quantité de liquide de sorte que le liquide est refoulé à travers une turbine,
**caractérisé en ce que** le pompage ou le turbinage du liquide s'effectue successivement au moins en deux étages de pompage ou respectivement de turbinage prévus pour avoir lieu dans des plages de pressions différentes.

16. Procédé de conversion selon la revendication 15, **caractérisé en ce que**, lors du turbinage et après avoir admis une quantité d'air comprimé dans la chambre de conversion contenant encore de l'eau, on ferme l'arrivée d'air comprimé provenant du réservoir de stockage (20), et on détend l'air comprimé présent dans la chambre de conversion alors que le liquide restant est refoulé pour être turbiné.

17. Procédé de conversion selon la revendication 15, **caractérisé en ce que** :
- on pompe le liquide par des machines dynamo-hydrauliques (PT1, PT2, PT3) entraînées par au moins un moteur électrique fonctionnant avec l'énergie électrique issue d'un réseau électrique,
- on turbine le liquide par des machines dynamo-hydrauliques (PT1, PT2, PT3) qui entraînent un générateur électrique pour produire de l'énergie électrique restituée au réseau.

18. Procédé de conversion selon l'une des revendications 15 à 17, **caractérisé en ce que** :
- lors du pompage et après avoir transféré l'air comprimé dans le réservoir de stockage (20), on vidange le liquide contenu dans la chambre de conversion (CH1, CH2, CH3),
- lors du turbinage et après avoir détendu l'air contenu dans la chambre de conversion (CH1, CH2, CH3), on remplit de nouveau en liquide ladite chambre.

19. Procédé de conversion selon l'une des revendications 15 à 18, **caractérisé en ce que** la compression de l'air et/ou la détente de l'air dans l'au moins une chambre de conversion est quasi-isotherme.

## Patentansprüche

1. Energieumwandlungsvorrichtung zum Umwandeln von elektrischer Energie in lufttechnische Energie und umgekehrt und zum Speichern derselben in Form von Druckluft,
wobei die Vorrichtung enthält:
- dynamoelektrische Maschinen (MG1, MG2, MG3), die mit einem Netz in elektrischer Leistungsverbindung stehen,
- dynamohydraulische Maschinen (PT1, PT2, PT3), die mechanisch mit den dynamoelektrischen Maschinen verbunden sind,
- zumindest eine Umwandlungskammer (CH1, CH2, CH3), die dazu geeignet ist, einerseits Flüssigkeit zu enthalten, die von den als Pumpen betriebenen dynamohydraulischen Maschinen gepumpt wird, oder Flüssigkeit aufzunehmen, die dazu bestimmt ist, die als Expansionsmaschinen betriebenen dynamohydraulischen Maschinen zu speisen, und andererseits Luft zu enthalten, so dass die in der Kammer vorhandene Flüssigkeit einen Flüssigkeitskolben zum Komprimieren oder Entspannen der Luft bildet,
- einen Speichertank (20) zum Speichern von Druckluft bei einem Speicherdruck,
- Verbindungseinrichtungen (11, 13) zur bidirektionalen, lufttechnischen Verbindung, die zwischen den Umwandlungskammern (CH1 - CH6) und dem Speichertank (20) verschließbar sind,
**dadurch gekennzeichnet, dass**
jede dynamohydraulische Maschine (PT1, PT2, PT3) dazu vorgesehen ist, in einem jeweiligen Druckbereich an ihrer Hochdrucköffnung (16) betrieben zu werden, um das Pumpen bzw. hydraulische Entspannen gestuft in jeder Umwandlungskammer nacheinander mit mehreren der dynamohydraulischen Maschinen durchzuführen, und zwar bis bzw. von dem gewünschten Speicherdruck, wobei der Druckbereich enger ist als die Abweichung zwischen Niederdruck und Speicherdruck,
und dadurch, dass
Verteileinrichtungen (17) vorgesehen sind, um jede Umwandlungskammer nacheinander mit zumindest zwei dynamohydraulischen Maschinen zu verbinden, die dazu vorgesehen sind, in verschiedenen Druckbereichen betrieben zu werden.

2. Vorrichtung nach Anspruch 1, **dadurch gekennzeichnet, dass** zumindest eine dynamohydraulische Maschine (PT3) dazu vorgesehen ist, in einem engen Druckbereich betrieben zu werden, der im Wesentlichen dem Druck des Speichertanks (20) entspricht.

3. Vorrichtung nach Anspruch 1 oder 2, **dadurch gekennzeichnet, dass** die dynamohydraulischen Maschinen (PT1, PT2, PT3) zwischen einer Niederdruckflüssigkeitsquelle und der zumindest einen Umwandlungskammer (CH1, CH2, CH3) hydraulisch parallel zueinander geschaltet sind.

4. Vorrichtung nach einem der Ansprüche 1 bis 3, **dadurch gekennzeichnet, dass** der Speichertank (20) unter Wasser liegt und im unteren Teil offen ist, um das Wasser aus der Wasserumgebung aufzunehmen, die eine Lufttasche mit einem Druck umschließt, der von der Eintauchtiefe des Tanks bestimmt wird.

5. Vorrichtung nach einem der vorangehenden Ansprüche, **dadurch gekennzeichnet, dass** sie dazu vorgesehen ist, die Umwandlung von elektrischer Energie in lufttechnische Energie und umgekehrt mehrere Pump- bzw. Turbinierzyklen lang durchzuführen, wobei jeder Zyklus über die aufeinanderfolgenden Druckbereiche erfolgt.

6. Vorrichtung nach einem der vorangehenden Ansprüche, **dadurch gekennzeichnet, dass** sie zumindest zwei Umwandlungskammern (CH1, CH2, CH3) enthält, um den Energiefluss in den dynamohydraulischen Maschinen (PT1, PT2, PT3) dauerhaft aufrechtzuerhalten.

7. Vorrichtung nach Anspruch 6, **dadurch gekennzeichnet, dass** die Flüssigkeitspegelschwankungszyklen in den Umwandlungskammern (CH1, CH2, CH3) zwischen den Umwandlungskammern phasenverschoben sind, wobei jede dynamohydraulische Maschine (PT1, PT2, PT3) nacheinander mit mehreren Umwandlungskammern verbunden ist, die sich zeitversetzt in dem Druckbereich befinden, der dieser dynamohydraulischen Maschine entspricht.

8. Vorrichtung nach einem der vorangehenden Ansprüche, **dadurch gekennzeichnet, dass** eine Pause zu dem Zeitpunkt vorgesehen ist, zu dem zumindest eine Umwandlungskammer von einer dynamohydraulischen Maschine (PT1, PT2, PT3) auf eine andere übergeht.

9. Vorrichtung nach einem der vorangehenden Ansprüche, **dadurch gekennzeichnet, dass** sie hydraulische Anpassungseinrichtungen (P1, P2, P3) enthält, um den Flüssigkeitspegel an seinen Ausgangszustand anzupassen, um den Pump- bzw. Turbinierbetrieb in der zumindest einen Umwandlungskammer (CH1, CH2, CH3) durchzuführen.

10. Vorrichtung nach einem der vorangehenden Ansprüche, **dadurch gekennzeichnet, dass** sie mehr Umwandlungskammern (CH1, CH2, CH3) als dynamohydraulische Maschinen (PT1, PT2, PT3) enthält.

11. Vorrichtung nach einem der vorangehenden Ansprüche, **dadurch gekennzeichnet, dass** die dynamohydraulischen Maschinen (PT1, PT2, PT3) vom Typ Pumpe-Turbine sind, der dazu geeignet ist, als Pumpe oder umgekehrt als Turbine betrieben zu werden.

12. Vorrichtung nach dem vorangehenden Anspruch, **dadurch gekennzeichnet, dass** die dynamohydraulischen Maschinen (PT1, PT2, PT3) Pumpen-Turbinen vom Kaplan-Typ oder Deriaz-Typ sind.

13. Vorrichtung nach einem der vorangehenden Ansprüche, **dadurch gekennzeichnet, dass** die dynamoelektrischen Maschinen (MG1, MG2, MG3) reversible Motorgeneratoren sind.

14. Vorrichtung nach einem der Ansprüche 1 bis 13, **dadurch gekennzeichnet, dass** die Einrichtungen (11, 13) zur bidirektionalen Verbindung verschlossen sind, außer während einer Endphase der Kompression und während einer Anfangsphase der Entspannung.

15. Verfahren zum Umwandeln von elektrischer Energie in lufttechnische Energie und umgekehrt, wobei:
- eine einen Flüssigkeitskolben bildende Flüssigkeit in eine Umwandlungskammer (CH1, CH2, CH3) gepumpt wird, in welcher eine Luftmenge solange eingeschlossen ist, bis diese Luft einen Druck eines Druckluftspeichertanks (20) erreicht, wonach die Druckluft von der Umwandlungskammer zum Speichertank (20) überführt wird, und/oder
- eine Flüssigkeit turbiniert wird, indem Druckluft in eine Umwandlungskammer (CH1, CH2, CH3) eingelassen wird, die eine Flüssigkeitsmenge enthält, so dass die Flüssigkeit durch die Turbine verdrängt wird,
**dadurch gekennzeichnet, dass** das Pumpen bzw. Turbinieren der Flüssigkeit nacheinander zumindest in zwei Pump- bzw. Turbinierstufen erfolgt, die dazu vorgesehen sind, in verschiedenen Druckbereichen abzulaufen.

16. Umwandlungsverfahren nach Anspruch 15, **dadurch gekennzeichnet, dass** bei dem Turbinieren und nach dem Einlassen einer Druckluftmenge in die noch Wasser enthaltende Umwandlungskammer die Zufuhr von aus dem Speichertank (20) kommender Druckluft geschlossen wird und die in der Umwandlungskammer vorhandene Druckluft entspannt wird, während die verbleibende Flüssigkeit verdrängt wird, um turbiniert zu werden.

17. Umwandlungsverfahren nach Anspruch 15, **dadurch gekennzeichnet, dass**:
- die Flüssigkeit von dynamohydraulischen Maschinen (PT1, PT2, PT3) gepumpt wird, die über zumindest einen Elektromotor angetrieben werden, der mit der aus einem Stromnetz stammenden elektrischen Energie betrieben wird,
- die Flüssigkeit von dynamohydraulischen Maschinen (PT, PT2, PT3) turbiniert wird, die einen Stromgenerator antreiben, um elektrische Energie zu erzeugen, die in das Netz zurückgeführt wird.

18. Umwandlungsverfahren nach einem der Ansprüche 15 bis 17, **dadurch gekennzeichnet, dass**:
- beim Pumpen und nach dem Überführen der Druckluft in den Speichertank (20) die in der Umwandlungskammer (CH1, CH2, CH3) enthaltene Flüssigkeit abgelassen wird,
- beim Turbinieren und nach dem Entspannen der in der Umwandlungskammer (CH1, CH2, CH3) enthaltenen Luft die Kammer erneut mit Flüssigkeit gefüllt wird.

19. Umwandlungsverfahren nach einem der Ansprüche 15 bis 18, **dadurch gekennzeichnet, dass** das Komprimieren der Luft und/oder das Entspannen der Luft in der zumindest einen Umwandlungskammer quasiisotherm erfolgt/erfolgen.

## Claims

1. Energy conversion device for converting electrical energy into aeraulic energy and vice versa, and for storing this in the form of compressed air, the device comprising:
- dynamo-electric machines (MG1, MG2, MG3) which have an electrical power link to a grid,
- dynamo-hydraulic machines (PT1, PT2, PT3) mechanically linked to the dynamo-electric machines,
- at least one conversion chamber (CH1, CH2, CH3) capable on the one hand of containing liquid pumped by the dynamo-hydraulic machines operating as pumps or receiving liquid intended to supply power to the dynamo-hydraulic machines operating as expanders, and on the other hand of containing air, such that the liquid present in the chamber forms a liquid piston for compression or expansion of air,
- a reservoir (20) for storing compressed air at a storage pressure,
- sealable means (11, 13) for bidirectional aeraulic communication between the conversion chambers (CH1 - CH6) and the storage reservoir (20),
**characterized in that** each dynamo-hydraulic machine (PT1, PT2, PT3) is provided in order to operate within a respective pressure range at its highpressure opening (16) in order to carry out the pumping or the hydraulic expansion in stages inside each conversion chamber successively with several said dynamo-hydraulic machines up to or, respectively, from the desired storage pressure, the pressure range being narrower than the difference between the low pressure and the storage pressure,
**and in that** distribution means (17) are provided to connect each conversion chamber successively to at least two dynamo-hydraulic machines provided in order to operate within different pressure ranges.

2. Device according to claim 1, **characterized in that** at least one dynamo-hydraulic machine (PT3) is provided in order to operate within a narrow pressure range substantially corresponding to the pressure of the storage reservoir (20).

3. Device according to claim 1 or 2, **characterized in that** the dynamo-hydraulic machines (PT1, PT2, PT3) are mounted hydraulically in parallel with each other between a low-pressure liquid source and the at least one conversion chamber (CH1, CH2, CH3).

4. Device according to one of claims 1 to 3, **characterized in that** the storage reservoir (20) is underwater and open in the lower part to receive water from the aquatic environment, enclosing a pocket of air at a pressure defined by the submersion depth of the reservoir.

5. Device according to one of the preceding claims, **characterized in that**, to carry out the conversion of the electrical energy into aeraulic energy and vice versa, several cycles of pumping or turbining respectively are provided, each cycle passing through the successive pressure ranges.

6. Device according to one of the preceding claims, **characterized in that** it comprises at least two conversion chambers (CH1, CH2, CH3) in order to continuously maintain the energy flow in the dynamo-hydraulic machines (PT1, PT2, PT3).

7. Device according to claim 6, **characterized in that** the cycles of varying the level of liquid in the conversion chambers (CH1, CH2, CH3) are phase shifted between conversion chambers, each dynamo-hydraulic machine (PT1, PT2, PT3) being connected successively to several conversion chambers which have a time offset within the pressure range corresponding to this dynamo-hydraulic machine.

8. Device according to one of the preceding claims, **characterized in that** a pause is provided at the time when the at least one conversion chamber passes from one dynamo-hydraulic machine (PT1, PT2, PT3) to another.

9. Device according to one of the preceding claims, **characterized in that** it comprises hydraulic readjustment means (P1, P2, P3) for readjusting the level of liquid to its initial state in order to carry out the pumping or the turbining in the at least one conversion chamber (CH1, CH2, CH3).

10. Device according to one of the preceding claims, **characterized in that** it comprises more conversion chambers (CH1, CH2, CH3) than dynamo-hydraulic machines (PT1, PT2, PT3).

11. Device according to one of the preceding claims, **characterized in that** the dynamo-hydraulic machines (PT1, PT2, PT3) are of the pump-turbine type capable of operating as a pump or, conversely, as a turbine.

12. Device according to the preceding claim, **characterized in that** the dynamo-hydraulic machines (PT1, PT2, PT3) are pump-turbines of the Kaplan or Deriaz type.

13. Device according to one of the preceding claims, **characterized in that** the dynamo-electric machines (MG1, MG2, MG3) are reversible motor-generators.

14. Device according to one of claims 1 to 15, **characterized in that** the bidirectional communication means (11, 13) are closed, except for during a final phase of compression and during an initial phase of expansion.

15. Method for converting electrical energy into aeraulic energy and vice versa, in which:
- a liquid is pumped, forming a liquid piston in a conversion chamber (CH1, CH2, CH3) in which a quantity of air is trapped until this air reaches a pressure of a compressed air storage reservoir (20), then the compressed air is transferred from the conversion chamber to the storage reservoir (20), and/or
- a liquid is turbined by allowing compressed air to enter a conversion chamber (CH1, CH2, CH3) containing a quantity of liquid such that the liquid is pushed through a turbine,
**characterized in that** the pumping or the turbining of the liquid is carried out successively at least in two stages of pumping or, respectively, turbining provided to take place within different pressure ranges.

16. Conversion method according to claim 15, **characterized in that**, during the turbining and after having allowed a quantity of compressed air to enter the conversion chamber still containing water, the inlet for compressed air originating from the storage reservoir (20) is closed, and the compressed air present in the conversion chamber is expanded, while the remaining liquid is pushed back in order to be turbined.

17. Conversion method according to claim 15, **characterized in that**:
- the liquid is pumped by dynamo-hydraulic machines (PT1, PT2, PT3) driven by at least one electric motor operating with electrical energy originating from an electricity grid,
- the liquid is turbined by dynamo-hydraulic machines (PT1, PT2, PT3) which drive an electric generator in order to generate electrical energy returned to the grid.

18. Conversion method according to one of claims 15 to 17, **characterized in that**:
- during the pumping and after having transferred the compressed air into the storage reservoir (20), the liquid contained in the conversion chamber (CH1, CH2, CH3) is drained,
- during the turbining and after having expanded the air contained in the conversion chamber (CH1, CH2, CH3), said chamber is filled with liquid again.

19. Conversion method according to one of claims 15 to 18, **characterized in that** the compression of the air and/or the expansion of the air in the at least one conversion chamber is quasi-isothermal.
